# EUROPÄISCHE PATENTSCHRIFT

(11) **EP 0 946 820 B1**
(45) Veröffentlichungstag und Bekanntmachung des Hinweises auf die Patenterteilung: **13.03.2002**
(21) Anmeldenummer: 97953656.2
(22) Anmeldetag: 19.12.1997
(51) Int. Cl.: D21F 11/00, D21G 9/00, D21H 23/78

(54) **VERFAHREN UND VORRICHTUNG ZUR PROZESSFÜHRUNG BEI DER HERSTELLUNG VON PAPIER**
METHOD AND DEVICE FOR CONDUCTING A PROCESS IN THE PRODUCTION OF PAPER
PROCEDE ET DISPOSITIF POUR CONDUIRE UN PROCESSUS LORS DE LA FABRICATION DE PAPIER

(30) Priorität: 20.12.1996 DE 19653477
(43) Veröffentlichungstag der Anmeldung: 06.10.1999
(73) Patentinhaber: SIEMENS AKTIENGESELLSCHAFT, 80333 München (DE)
(72) Erfinder: ROTH, Christoph, D-81739 München (DE); FURUMOTO, Herbert, D-91052 Erlangen (DE); ZEINER, Gerhard, D-70563 Stuttgart (DE); LAMPE, Uwe, D-21614 Buxtehude (DE)
(86) Internationale Anmeldenummer: DE9702987
(87) Internationale Veröffentlichungsnummer: WO9828490

(56) Entgegenhaltungen:
- EP-A- 0 421 172
- WO-A-92/17642
- WO-A-95/08019
- WO-A-95/15492
- WO-A-95/31709
- WO-A-96/19615
- DE-A- 4 133 439
- DE-A- 19 510 009
- US-A- 4 098 641

## Beschreibung

Die Erfindung bezieht sich auf ein Verfahren zur Prozeßführung und Prozeßoptimierung bei der Herstellung von Papier aus Faserstoff, insbesondere Altpapier und/oder Zellstoff, durch Aufbereiten des Faserstoffes und anschließendes Bilden des Papiers unter Einsatz wenigstens eines Zustandsmodells und/oder Prozeßmodells. Daneben bezieht sich die Erfindung auf eine Vorrichtung zur Durchführung dieses Verfahrens.

Zur Herstellung von Papier werden heutzutage als Rohstoff variable Anteile aus Altpapier und separat erzeugtem Zellstoff eingesetzt. Üblicherweise wird das Altpapier durch Auflösen und Deinken, der Zellstoff durch Herauslösen des Restlignins aufbereitet, wobei das Mischprodukt allgemein als "Stoff" bezeichnet wird. Für eine Anlage zur Papierherstellung, einschließlich der Stoffaufbereitung und der Papiermaschine, werden an die Prozeßführung, insbesondere der Prozeßführung mit Automatisierungsgeräten, erhebliche Anforderungen gestellt.

Die Prozeßführung bei der Papierherstellung ist deswegen schwierig, da mechanische Papiereigenschaften - wie beispielsweise Zugfestigkeit, Weiterreißfestigkeit, Flachstauchwiderstand, Ringstauchwiderstand, die Berstfestigkeit, Rupffestigkeit, Verhalten gegenüber Flüssigkeit, Bedruckbarkeit - . erst am fertigen Produkt erfaßt werden können. Da diese Werte im Labor mit Zeitverzögerung gemessen werden, kann eine zwischenzeitliche Fehlproduktion nicht ausgeschlossen werden. Um Fehlproduktionen möglichst zu vermeiden, werden üblicherweise höherwertige Rohstoffe und Hilfsstoffe, z.B. Leimauftrag, Additive, in größerem Umfang eingesetzt, als eigentlich zur Erzielung der gewünschten Papierqualität erforderlich wäre.

Beim Stand der Technik werden häufig folgende Strategien angewandt:
- Der Prozeß wird nach Erfahrungswerten gesteuert. Regeleingriffe sind nur in geringem Umfang möglich. Die Produktqualität kann nur im nachhinein bestimmt werden. Eine große Streuung der Qualitätsparameter ist daher häufig nicht vermeidbar, insbesondere wenn die Qualität der eingesetzten Rohstoffe wie die des Altpapiers oder die des Zellstoffes stark schwankt.
- Es wird bereits versucht, den Prozeß über online meßbare Hilfsgrößen zu regeln. Diese Strategie wird nur gelegentlich eingesetzt, da die Zahl der mit nicht zu hohen Aufwand meßbaren Hilfsgrößen begrenzt ist und zudem häufig nur ein empirischer Zusammenhang mit den Zielgrößen besteht.

Zum Einsatz der Infrarot-Spektroskopie bei der Papierherstellung sind folgende Veröffentlichungen bekannt:
In der DE 195 10 009 A1 werden für ein Verfahren zur Prozeßführung einer Papiermaschine ausgewählte spektrale Kennwerte für die Bestimmung von Produktqualitätsparametern mit neuronalen Netzen verwendet. Speziell am Beispiel des Stoffauflaufes einer Papiermaschine werden solche neuronale Netze eingesetzt, die an den im Labor gemessenen Produktparametern trainiert wurden. In der DE 195 10 008 A1 wird ein Verfahren zur Prozeßführung bei der Zellstoff- und Papierherstellung beschrieben, dem spektrale Kennwerte unterschiedlicher Wellenlängen zur Bestimmung der Ausgangsstoffe und zur Bewertung der Rohstoffqualität verwendet werden. Insbesondere mit neuronalen Netzen werden daraus Korrektursignale für die Regel- oder Steuereinrichtung abgeleiteten. Die Messung der spektralen Kennwerte erfolgt am Rohstoff "Holz", wie insbesondere Holzhackschnitzel, Holzfasern, oder am Rohrstoff "Altpapier" als Ausgangsstoffe für die Zellstoff- und Papierherstellung.

Mit der WO 95/31709 A1 wird eine Vorhersage der Naßreißfestigkeit mit Hilfe von spektroskopischen Messungen an Papier oder Zellstoff unter Verwendung mathematischer Methoden vorgeschlagen. Aus der WO 93/15389 A1 sind ein Verfahren und eine Vorrichtung zur Inline-Bestimmung der sog. "Freeness'", d.h. dem Mahlgrad von Refiner-Holzstoff, bekannt: Dazu werden spektrale Kennwerte von ausgewählten Wellenlängenbändern durch ein Rechenverfahren verarbeitet um den gewünschten Qualitätsindex "Freeness" zu erhalten. Bei der Kalibrierung werden gleichzeitig spektrale Messungen und Qualitätsmessungen durchgeführt, die Meßergebnisse werden in neue Variable verarbeitet und die Abhängigkeit der "Freeness" unter Verwendung der Hauptkomponenten-Methode bestimmt, wobei die verwendeten Wellenlängen zwischen 0,1 - 10 µm liegen.

Bei der WO 95/08019 A1 geht um die Aufbereitung von Altpapier, d.h. um die Erzeugung von sogenanntem deinktem Zellstoff, wobei an der Altpapiersuspension spektrale und/oder physikalische Kennwerte aufgenommen werden. Als spektrale Kennwerte werden nach Einstrahlen von Licht mit vorgegebener spektraler Verteilung speziell Intensitäten bei definierten Wellenlängen erfaßt und insbesondere über ein neuronales Netz ausgewertet.

Schließlich wird in der DE 41 33 439 A1 ein Verfahren zur kontinuierlichen Messung der sogenannten dynamischen Wasserretention einer Beschichtung auf einem vorbeilaufenden Träger und insbesondere auf einem Blatt Papier beschrieben, bei dem an einer ersten Station Strahlung mit einem bekannten Frequenzspektrum in irgendeiner Ebene in bezug auf die Richtung des Ablaufens des Trägers eingestrahlt wird und in derselben Ebene die reflektierte Strahlung erfaßt wird. Durch spezifisches Vorgehen der Messung, insbesondere wiederholende Messung, wird aus den reflektierten Signalen nach bestimmter Vorschrift die Retention ermittelt.

Ausgehend vom abgehandelten Stand der Technik ist es Aufgabe der Erfindung, die Prozeßführung bei der Papierherstellung weiter zu optimieren und eine zugehörige Vorrichtung zu schaffen.

Die Aufgabe ist erfindungsgemäß mit den Merkmalen des Patentanspruches 1 gelöst, wobei die abhängigen Ansprüche vorteilhafte Weiterbildungen beinhalten. Die zugehörige Vorrichtung ist im einzigen Sachanspruch angegeben.

Bei der Erfindung werden vorzugsweise spektroskopische Messungen online im Spektralbereich von 0,1 µm bis 400 µm am Stoff und/oder am Papier, d.h. im einzelnen an einer Stoffsuspension in der Stoffaufbereitung und/oder am Stoffauflauf und/oder an der laufenden Papierbahn, durchgeführt. Die Spektren können mit unterschiedlichen Rechenverfahren ausgewertet werden und ermöglichen eine Vorhersage der erzielbaren Papierqualität, wobei der Einfluß von Hilfsstoffen, z.B. Leim, ebenfalls in den Vorhersagemodellen berücksichtigt werden kann. Auf der Basis dieser Vorhersage kann in den Prozeß regelnd eingegriffen werden, z. B. durch Veränderung der Rohstoffmischung, Verringerung des Anteiles hochwertiger Rohstoffe, Veränderung der Mahlung oder des Zusatzes von Hilfsstoffen, z.B. von Leim. Damit kann vorteilhafterweise eine Ersparnis beim Rohstoffeinsatz bei gleichbleibender Produktqualität und eine Vermeidung von Fehlproduktionen mit minderer Qualität erreicht werden.

Neben der Vorhersage von bisher nur offline meßbaren Eigenschaften können nunmehr Eigenschaften wie Aschegehalt, Weiße, Opazität, Schmutzpunkte direkt bestimmt und/oder vorhergesagt werden, die z. Zt. online nur mit einer speziellen, zum Teil sehr aufwendigen Sensorik gemessen werden können. Ein wesentlicher Vorteil der Erfindung liegt in der Ersparnis dieser zusätzlichen Sensorik.

Die Erfindung ist also gegenüber dem eingangs abgehandelten Stand der Technik in allen wesentlichen Punkten, wie der Meßort, die Meßmethode, die Verarbeitung der Spektren, und die Modellbildung vorteilhaft weiterentwickelt.

Im Rahmen der Erfindung kann die Messung auch an einer mit Hilfe eines Probennehmers gewonnenen Stoffprobe erfolgen. Die Stoffprobe kann in gewünschter Weise aufbereitet werden, z.B. durch Aufkonzentrieren, Trocknen und/oder Bildung eines Probenblattes. Bei Bildung eines Probenblattes ist eine anschließende Labormessung der Papiereigenschaften möglich, z.B. um die Qualität der Vorhersagen kontrollieren zu können und um gegebenenfalls die Modelle für Qualitätsparameter zu verbessern, wenn z.B. wichtige Prozeßgrößen wie die Rohstoffqualität sich ändern oder der Prozeßablauf geändert wurde. Alternativ oder parallel kann auch eine Messung an der laufenden Papierbahn erfolgen, z.B. vor der Trockenpartie oder am Ende der Papiermaschine vor dem sog. Tambour des zugehörigen Rollenschneiders.

Wie bereits erwähnt, erfolgt die Messung insbesondere mit elektromagnetischen Wellen im Wellenlängenbereich von 0,1 µm - 400 µm erfolgen. Gemessen werden können die Absorptions-, Emissions-, Lumineszenz- oder Raman-Spektren der Stoffproben. Die Absorptionsspektroskopie kann in Transmission, diffuser Reflexion oder gedämpfter Totalreflexion (ATR = "attenuated total reflection") erfolgen. Die Anregung der Lumineszenz kann z.B. durch die Einstrahlung von elektromagnetischer Strahlung, z.B. UV-Strahlung, oder durch eine spezifische chemische Reaktion wie Chemolumineszenz od. dgl., die Anregung der Emission kann dagegen z.B. durch Bestrahlung mit Elektronen erfolgen.

Bei Messung im Bereich des Infraroten (IR: 1 µm bis 25 µm) kann vorzugsweise die Fourier-Transformations-Spektroskopie (FTIR) eingesetzt werden. An inhomogen Stoffproben kann die spektroskopische Messung mehrfach oder verschiedene Meßorte am gelösten bzw. aufbereiteten Faserstoff und/oder am Papier erfolgen.

Die Spektren können vorteilhaft durch folgende Maßnahmen vorverarbeitet werden:
- durch Fourier-Transformation
- bei Messung der Absorption durch diffuse Reflexion Umrechnung in Kubelka-Munk-Einheiten und Korrektur von Mehrfachstreueffekten
- durch Normierung und Glättung der Spektren
- durch Ermittlung von für die Modellbildung ungeeigneten Spektren. Bei der Modellierung der z.B. mechanischen Papiereigenschaften sind Spektren, die z.B. an Schutzpunkten, z.B. Farbreste im Altpapier usw., gemessen wurden, ungeeignet und müssen verworfen werden. Die Ausschaltung ungeeigneter Messungen kann z.B. durch Vergleich mit Referenzspektren erfolgen.
- Bei mehreren Spektren zu einer Probennahme durch Bildung von Mittelwerten.

Nach diesen ersten Verarbeitungsschritten können zur Weiterverarbeitung der ganz oder abschnittsweise aufbereiteten Spektren vorzugsweise folgende rechnerische Verfahren zur Ermittlung von Kenngrößen angewandt werden:
- Hauptkomponentenanalyse (PCA), bei dem eine Beschreibung der Spektren durch die Hauptkomponenten erfolgt
- "Partial Least Square"(PLS)-Verfahren
- Neuronale Netze
- Analytische Beschreibung der Spektren, z.B. im Bereich des IR durch Lage, Intensität und Breite der wichtigsten Absorptions- oder Emissionspeaks, Ermittlung dieser Größen z.B. mit einfachen Minimum-Maximum-Verfahren oder der 2. Ableitung.
Die Kenngrößen werden zur Modellierung der gewünschten Qualitätsparameter herangezogen.

Die Modelle für Berechnung der Qualitätsparameter können bei ausreichend großer Zahl von Daten vorzugsweise Neuronale Netze, Fuzzy-Systeme oder Multilineare Regressionsmodelle bzw. Kombinationen daraus sein. Alternativ zu rein datengetriebenen Modellen sind auch kombinierte Modelle möglich, bei denen analytisches Wissen eingebracht wird, z.B. daß mit steigendem Aschegehalt des Rohstoffes die mechanischen Qualitätsparameter des daraus erzeugten Papiers sich verschlechtern. Zur Erhöhung der Vorhersagegenauigkeit ist es sinnvoll, z.B. fünf bis zehn Teilmodelle zu bilden, deren Zuordnung z.B. über die eingesetzten Rohstoffe erfolgen kann.

Die Aufstellung der Modelle, d.h. Auswahl der Modelleingangsgrößen, und deren Validierung erfolgt mit Labormessungen am Zwischen- und Endprodukt. Es können neuronale Netze eingesetzt werden, die online trainiert werden. Eine in die Spektrenvorverarbeitung integrierte Methode der sogenannten "Novelty Detection" entsprechend der älteren, nichtvorveröffentlichten DE 196 322 45 A1 kann im laufenden Prozeß rechtzeitig die Notwendigkeit einer neuen Trainingsphase anzeigen.

Weitere Einzelheiten und Vorteile der Erfindung ergeben sich aus der nachfolgenden Figurenbeschreibung von Ausführungsbeispielen anhand der Zeichnung. Es zeigen
- Figur 1: ein Schema der Meßstellen bei einer Anlage zur Papierherstellung,
- Figur 2a bis 2c: kontinuierliche Spektren von optischen Messungen an einer Faserstoffsuspension und von mechanischen Messungen an Fasern,
- Figur 3: ein Zustandsmodell für die Qualitätsparameter bei einer Papiermaschine,
- Figur 4: ein Prozeßmodell des sogenannten CMT-Wertes einer Fasermischung bei der Altpapieraufbereitung,
- Figur 5: ein Prozeßmodell des CMT-Wertes des Papiers auf der Papiermaschine,
- Figur 6: ein dynamisches Prozeßmodell für den CMT-Wert,
- Figur 7: den schematischen Aufbau einer Prozeßoptimierung zum Steuern der Papierherstellung,
- Figur 8: eine Variante von Figur 7 unter Einbeziehung des dynamischen Modells gemäß Figur 6,
- Figur 9: die Vorverarbeitung und Verdichtung der Spektren und
- Figur 10: eine Vorrichtung zur optimierten Prozeßführung bei der Papierherstellung.

Die Figuren werden nachfolgend teilweise gemeinsam beschrieben. Gleiche bzw. gleichwirkende Teile haben sich entsprechende Bezugszeichen.

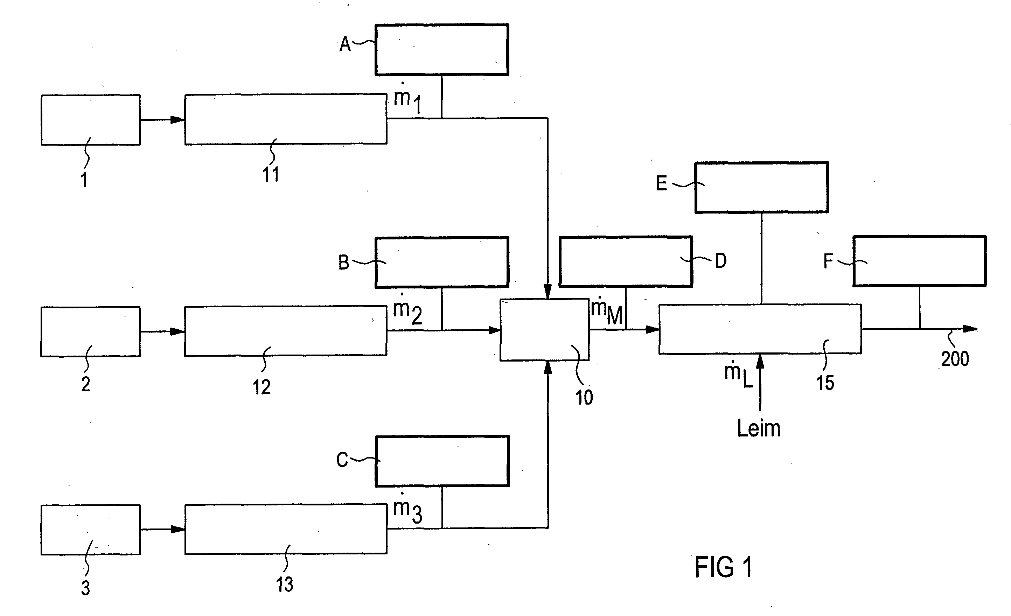

In der Figur 1 ist beispielhaft ein Meßstellenschema für die Papierherstellung dargestellt, bei dem die Herstellung des Papieres unter Einsatz von Altpapier erfolgt. Dafür ist in der Figur 1 eine Mischbütte mit 10 bezeichnet, der beispielsweise drei Altpapiersorten über einen ersten Pulper 1, einen zweiten Pulper 2 und einen dritten Pulper 3 zugeführt werden. Den Pulpern 1 bis 3 folgen jeweils Einheiten zur Stoffaufbereitung 11 bis 13. Von der Mischbütte 10 wird der aufbereitete Stoff auf den nicht im einzelnen dargestellten Stoffauflauf einer Papiermaschine 15 gegeben, in der in bekannter Weise das Papier gebildet wird. Die Papiermaschine 15 gibt als Herstellungsprodukt eine durchlaufende Papierbahn 200 aus.

In der Figur 1 ist das Meßstellenschema der Altpapieraufbereitung und der Papiermaschine im einzelnen dargestellt. In den Massestrom ***ṁ***_{**1**}, ***ṁ***_{**2**} und ***ṁ***_{**3**} des aufbereiteten Stoffes sind jeweils drei Meßstellen für Spektren A, B, C eingebracht. Nach der Mischbütte wird ein Spektrum D am Strom ***ṁ***_{***M***} abgenommen. Weitere Spektren E und F können an der Papiermaschine 15 einerseits bei der Papierbildung und an der laufenden Papierbahn 200 andererseits aufgenommen werden.

Für die Prozeßsteuerung sind die Meßwerte im Stoffstrom von Bedeutung. Dafür kann nach den Sortier- und Reinigungsstufen vor dem Stoffauflauf ein nicht im einzelnen dargestellter Probennehmer installiert werden. In diesem Probennehmer wird ein Probenblatt für die Papierbildung gebildet, das insbesondere auch für Labormessungen benutzt werden kann. Im Probennehmer ist ein FTIR-Spektrometer integriert, mit dem unter Ausschluß der Luftfeuchtigkeit, z B. durch Stickstoffspülung im Vakuum, im Bereich des IR (1 bis 25 µm) das Probenblatt mehrfach, beispielsweise 10 bis 20 Spektren, an verschiedenen Meßorten in Transmission oder diffuser Reflexion spektroskopiert werden kann.

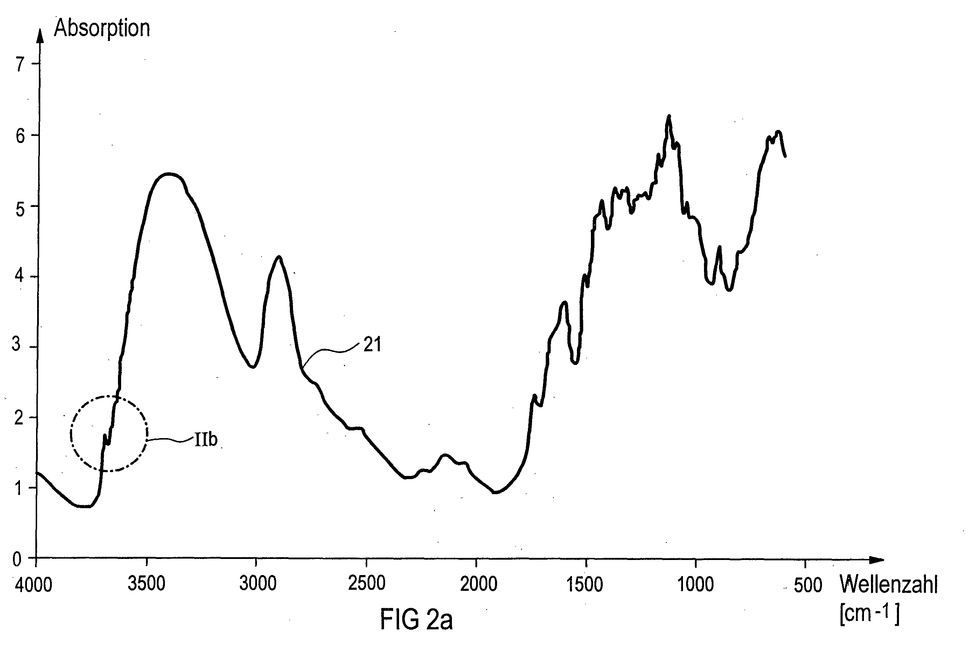

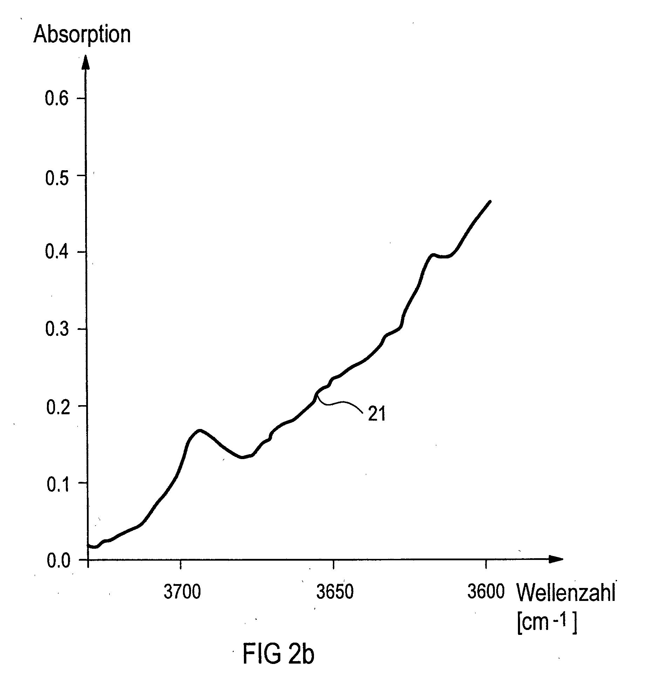

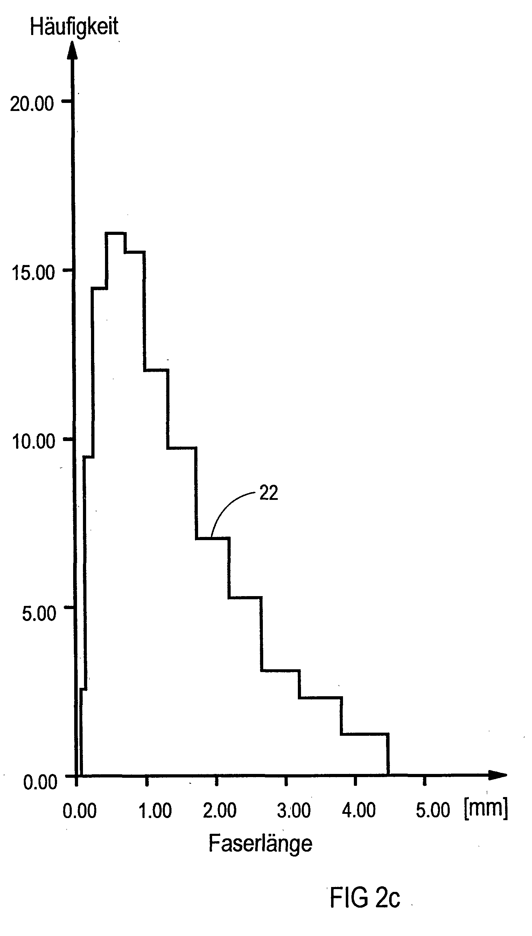

In Figur 2a kennzeichnet 21 den Verlauf eines IR-Spektrums von Papier. Dabei ist für die Praxis speziell ein Ausschnitt gemäß Figur 2b im Bereich von 3700 - 3600cm⁻¹ (sog. Aschebereich) des Spektrums von Bedeutung. In Figur 2c ist dagegen das Spektrum einer Faserlängenverteilung von Faserstoff oder Papier dargestellt, wie es sich aus einer beispielhaften Messung der mechanischen Eigenschaften ergibt. Es ergibt sich entlang der Grenzlinie 22 der Balkendarstellung in etwa ein Verlauf entsprechend einer sog. Bernoulli-Verteilung. Die Verteilung der Siebfraktionen von einzelnen Fasern des Faserstoffes hat einen ähnlichen Verlauf.

Die anhand der Figuren 2a bzw. 2b erhaltenen Spektren werden mittels unterschiedlichster mathematischer Methoden aufbereitet. Dabei geht es im wesentlichen um eine Vorverarbeitung der Spektren, um das Einbringen von analytischem Wissen, um eine mögliche Ausreißererkennung und der bestimmungsgemäßen Ableitung von Steuergrößen für den Betrieb der gesamten verfahrenstechnischen Anlage.

Die gemessenen Spektren werden zunächst geglättet und normiert. Dabei werden die optischen Spektren gemäß Figur 2a vorteilhaft in drei Teilspektren aufgeteilt, den "OH - Bereich" (3800 - 2600 cm⁻¹), den "Fingerprintbereich" (2600 - 600 cm⁻¹) und den "Aschebereich" (3700 - 3600 cm⁻¹). Der "OH-Bereich" und "Fingerprintbereich" werden jeweils für sich normiert, und zwar der "OH - Bereich" auf das Minimum bei z.B. 3750 cm⁻¹ und das Maximum bei 3420 cm⁻¹, der Fingerprintbereich auf das Maximum bei 2900 cm⁻¹ und das Minimum bei 1920 cm⁻¹.

Der "Asche-Bereich" zwischen 3700 und 3600 cm⁻¹ wird für die folgende Verarbeitung einer Basislinienkorrektur unterworfen. Mit einem Minimum - Maximum Verfahren und der 2. Ableitung werden die Absorptionsmaxima als Peaks in den Spektren ermittelt, wobei Peaklage, Peakintensitäten, Peakbreite und andere Werte erfaßt werden. Als brauchbar identifizierte Spektren werden zur Mittelwertbildung herangezogen.

Aus den "Aschebereich" wird der Aschegehalt berechnet. Dieser wird zum einen als eine der direkten Qualitätsparameter des Produktes abgespeichert. Zum andern wird der Wert als eine der Eingangsgrößen für die spätere Modellbildung herangezogen.

Die berechneten Mittelwertspektren werden anschließend getrennt nach "OH - Bereich" und "Fingerprintbereich" und einer Zerlegung in ihre Hauptkomponenten unterworfen. Mit z.B. einer multilinearen Regression werden mit Hilfe von ausgewählten Hauptkomponenten als Eingangsgrößen die erreichbaren Qualitätsparameter, z.B. die Berstfestigkeit, der CMT oder die Reißlänge vorhergesagt. Für jeden zu berechnenden Qualitätsparameter sind eigene Modelle zu erstellen. Zur Erhöhung der Vorhersagegenauigkeit werden für jeden Parameter Teilmodelle gebildet. Die Zuordnung zu den Teilmodellen erfolgt auf der Basis der Zuordnung der Messungen zu Stoffklassen während der Vorverarbeitung. Bei einer Zuordnung von bis zu drei Stoffklassen zu Messungen an einem Blatt, können entsprechende Kombinationsmodelle berechnet werden, z.B. eine lineare Mischung der Modelle entsprechend dem Anteil der Stoffklasse im Blatt. Die vorhergesagten Werte sind als Ergebnis eines Kombinationsmodelles zu kennzeichnen.

Auf der Basis dieser Information ist es möglich, die Rohstoffzusammensetzung zu optimieren oder den Einsatz von Hilfsstoffen, wie insbesondere von Leim, zu regeln.

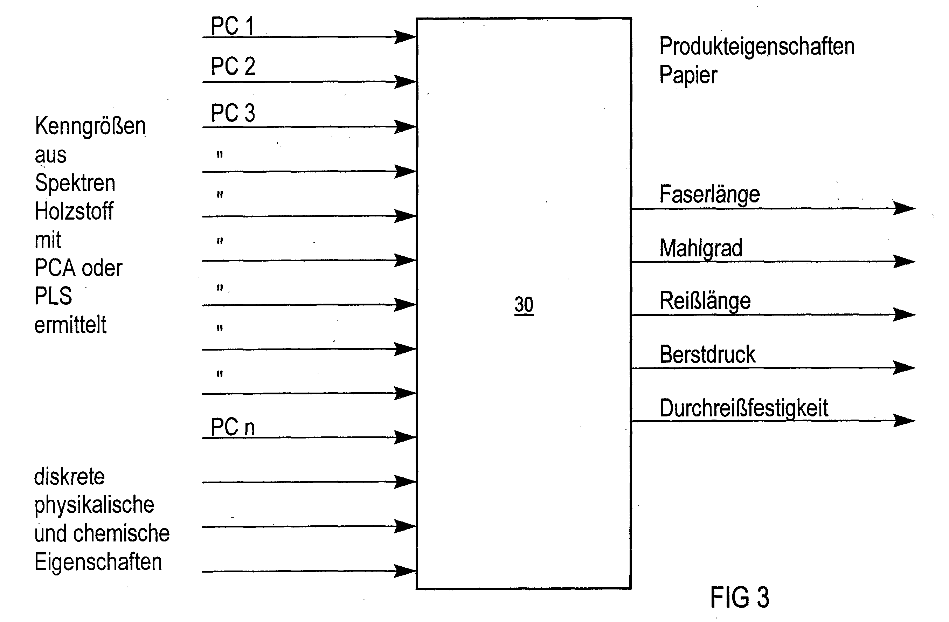

In Figur 3 bedeuten 30 ein Zustandsmodell der Papiermaschine, aus dem im wesentlichen die Qualitätsparameter für Papier wie Faserlänge, Reißlänge, Berstdruck, Durchreißfestigkeit und dgl. abgeleitet werden. Dazu werden aus Spektren gemäß Figur 2a und/oder Figur 2b entweder mit der sogenannten Hauptkomponentenanalyse (PCA = principal component analysis) oder mit der sogenannten PLS-Methode (partial least square) Kenngrößen ermittelt und in das Modell eingegeben. Dargestellt sind beispielsweise die Kenngrößen PC1 bis PCn, die mit beispielsweise 10 Scores ermittelt wurden. Weiterhin werden auch diskrete mechanische oder chemische Eigenschaften ausgewählt und in das Modell 30 eingegeben. Mit einer zusätzlichen Eingabe der Prozeßeigenschaften wird aus dem eigentlichen Zustandsmodell ein Prozeßmodell.

Um die Modellierung flexibler zu gestalten und um die Vorhersagegenauigkeit zu erhöhen, werden die bereits erwähnten Stoffklassen basierend auf der Stoffzusammensetzung gebildet. Die Stoffklassen können beispielsweise nach den Rohstoffen, nach Altpapiersorte oder Faserstoffart wie TMP, Zellstoff oder Holzschliff, oder nach den Produkten, z.B. klassifiziert nach dem Flächengewicht oder der hergestellten Papiersorte, aufgeteilt werden.

Idealerweise sollte für ein einziges Blatt jede Messung nur zu einer Stoffklasse zugeordnet werden können. Können mehr als drei Stoffklassen zugeordnet werden, gibt das System Alarm, da die Stoffmischung offensichtlich sehr inhomogen ist.

Weicht der Stoff nur wenig von den bekannten Zusammensetzungen ab, ist aber noch nicht dem System bekannt, wird das Spektrum zur Auswertung herangezogen. Das System gibt jedoch eine Meldung aus, daß eine erneute Nachmessung der Qualitätsparameter im Labor für eine neue Lernphase erforderlich ist.

Wenn das gemessene Spektrum stark von den Referenzen abweicht, ist die Messung z.B. an einem Schmutzpunkt erfolgt. Das Spektrum wird dann nicht für die weiteren Berechnungen herangezogen, jedoch zu Dokumentationszwecken abgespeichert. Stellt sich heraus, daß ein zu großer Anteil der Messungen z.B. 25 % verworfen werden müssen, dann gibt das System Alarm, da z.B. ein Fehler in den vorangehenden Sortier- und Reinigungsstufen vorliegen kann.

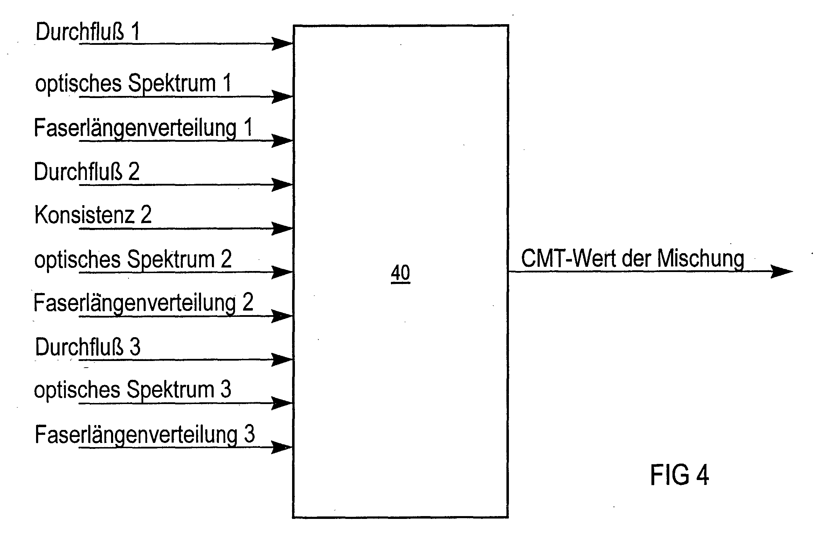

In Figur 4 ist speziell ein Prozeßmodell 40 für die Altpapieraufbereitung als Teilprozeß bei der Papierherstellung dargestellt. Eingegeben werden hier für die einzelnen Altpapieraufbereitungslinien jeweils der Durchfluß, das optische Spektrum und die Faserlängenverteilung, wobei speziell gemäß Figur 3 vorgegangen wird. Als Ergebnis liegt der sogenannte CMT-Wert der Altpapiermischung vor.

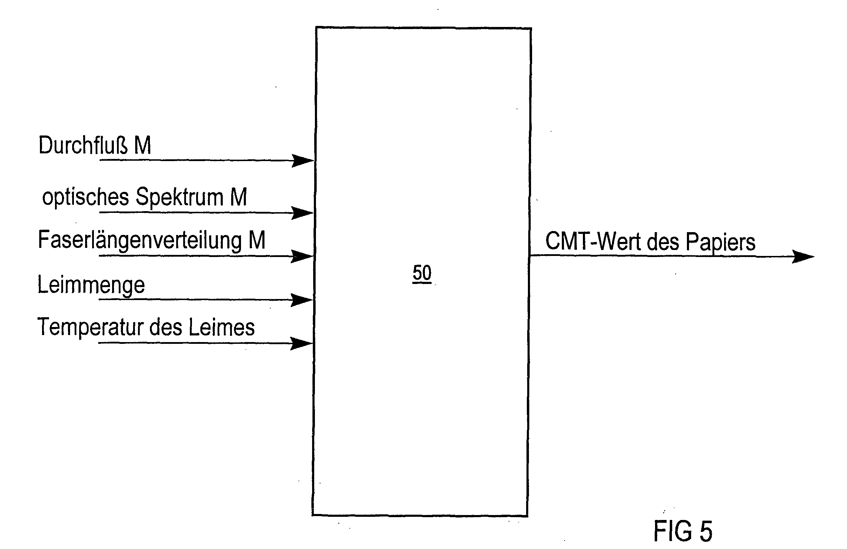

Gleichermaßen ist in Figur 5 ein Prozeßmodell 50 der Papiermaschine dargestellt, bei dem die Eingangsgrößen, der Durchfluß, das optische Spektrum, das mechanische Spektrum der Faserlängenverteilung, die Leimmenge und die Temperatur des Leimes gewählt werden. Hier ergibt sich als Ausgangsgrößen der CMT-Wert des Papieres, der Berstdruck, die Reißlänge und andere signifikante Größen.

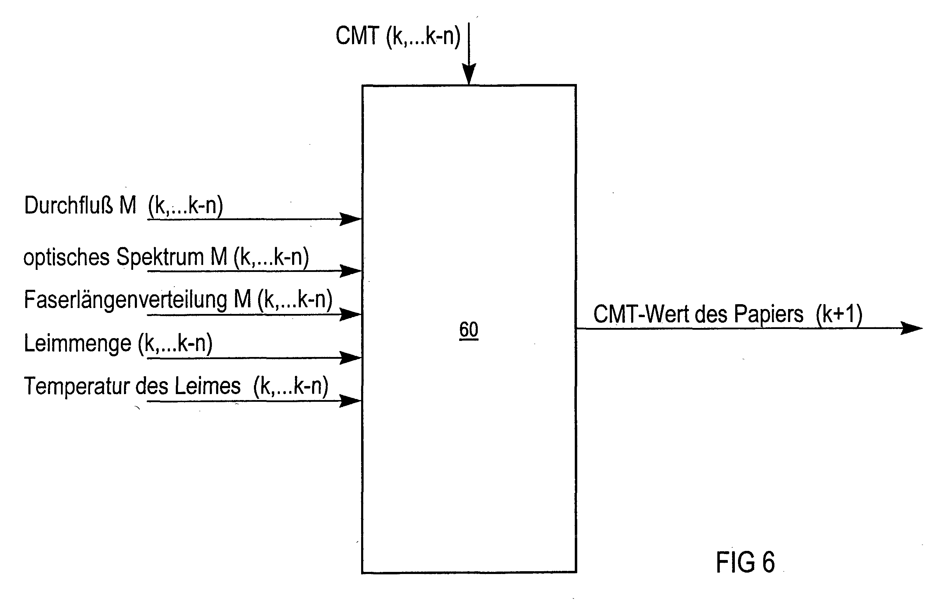

In Figur 6 ist dargestellt, daß bei einer dynamischen Vorgabe der Eingangsgrößen zum Zeitpunkt k, ... k-n und zusätzlich vorher bekannten CMT-Werten zum Zeitpunkt k, ... k-n durch ein dynamisches Prozeßmodell 60 der Papiermaschine sich die zeitlich variablen Werte wie CMT-Wert, Berstdruck und Reißlänge für Papier zum Zeitpunkt k+1 ergeben.

Bei der Aufstellung der Modelle kann von neuronalen Netzen und/oder Fuzzy-Logikverfahren Gebrauch gemacht werden. Insbesondere geht es darum, die Gültigkeit der Modelle zu validieren, was durch ein online-Training der einzelnen Modelle bzw. der Teilmodelle erfolgen kann. Dabei kann es für die Praxis wichtig sein, durch rechnergestützte Auswahl aller informationstragender Daten eine Überprüfung der jeweils erhaltenen Ergebnisse vorzunehmen. Dieses Verfahren wurde als sog. "Novelty Detection" vorgeschlagen und ermöglicht, neue Datensätze in das Auswerteverfahren einzubringen. Bei Vorliegen nicht konsistenter Ergebnisse ist ein Nachtrainieren der Modelle notwendig.

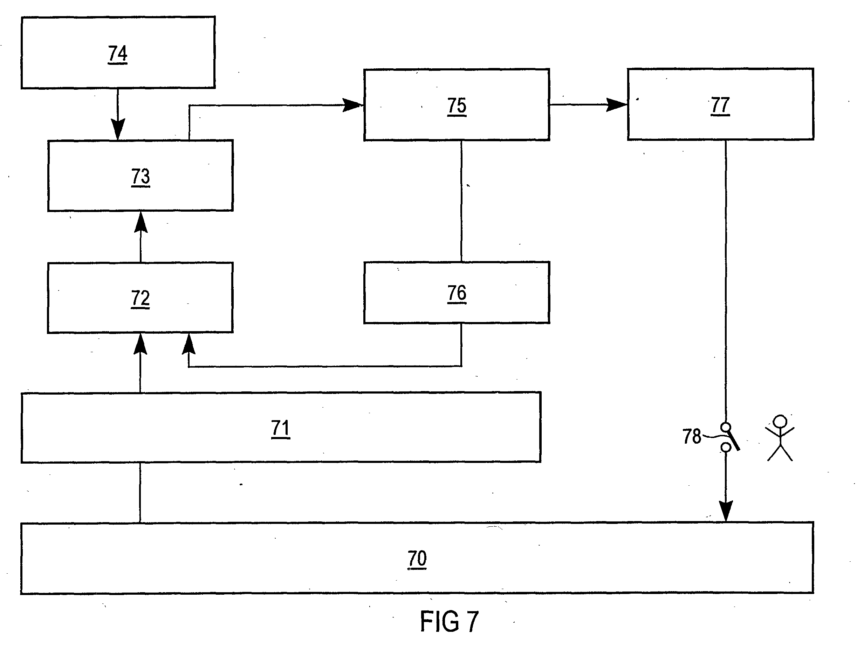

Die so erhaltenen Größen werden zur Prozeßführung eingesetzt. Dafür ist in Figur 7 der Prozeß allgemein mit 70 bezeichnet, woraus sich der aktuelle Prozeßzustand anhand der Spektren mit 71 ergibt. Das Prozeßmodell ist hier mit 72 bezeichnet, aus dem die Daten in eine Einheit zur Kostenfunktion 73 gegeben werden, die gleichzeitig mit Daten für Kosten und Preise aus der Einheit 74 beaufschlagt wird. Ein Optimierer 75 ermittelt daraus die Stellgrößen 76, die in das Prozeßmodell 72 zurückgekoppelt werden und weiterhin die optimalen Stellgrößen 77 zur Prozeßführung. Diese können über einen Schalter 78 vom Anlagenfahrer eingegeben werden, sofern sie als sinnvoll erkannt werden.

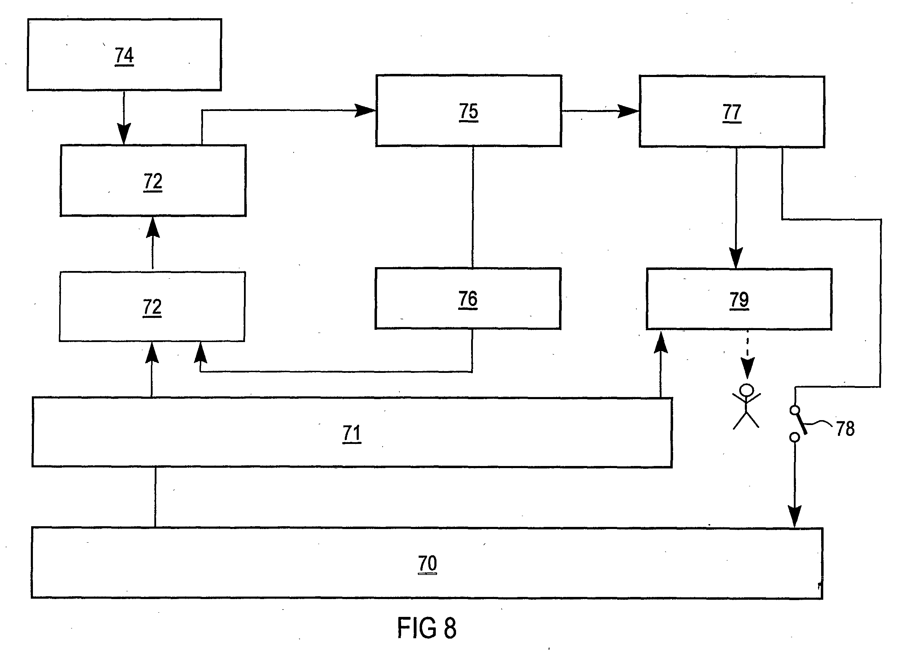

Entsprechendes ergibt sich aus Figur 8 für eine Prozeßführung, bei der gleichermaßen ein dynamisches Modell entsprechend der Figur 6 verwendet wird. Hier ist zusätzlich eine Einheit 79 mit dem dynamischen Modell vorhanden, in die der aktuelle Prozeßzustand einerseits und die optimalen Stellgrößen andererseits eingegeben werden.

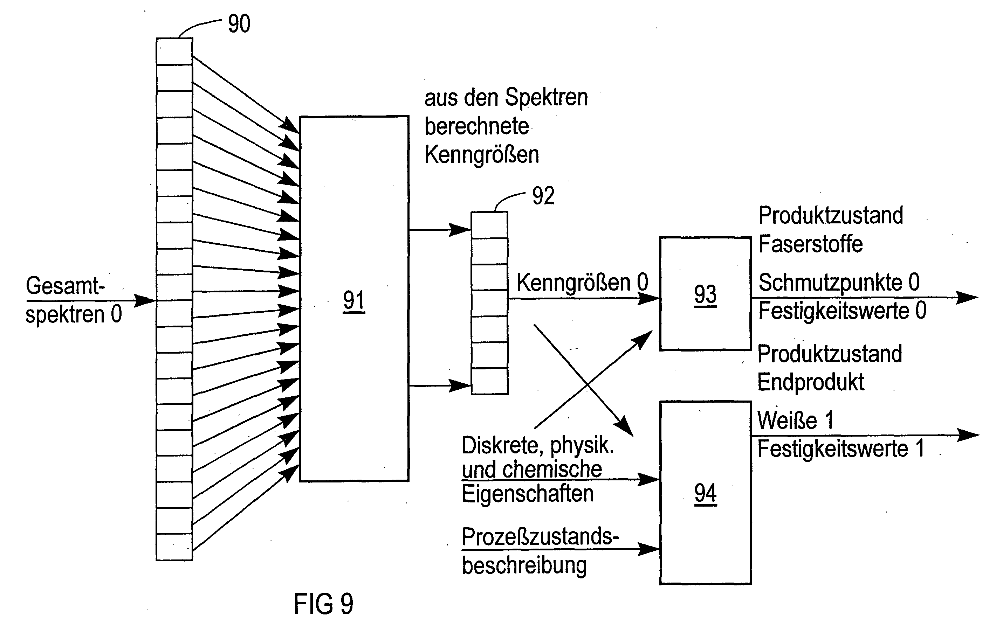

In Figur.9 ist dargestellt, daß eine Einheit 91 zur Vorverarbeitung und Verdichtung des Gesamtspektrums dient, aus dem entsprechend Einheit 92 die Kenngrößen berechnet werden. Die Kenngrößen fließen in das Zustandsmodell 93 und in das Prozeßmodell 94 ein, wobei zusätzlich diskrete mechanische und/oder chemische Eigenschaften und die Prozeßzustandsbeschreibung das Zustandsmodell zum Prozeßmodell ergänzen. Vom Zustandsmodell 93 wird der Qualitätsparameter für den Faserstoff und aus dem Prozeßmodell 94 der Qualitätsparameter für das Endprodukt abgeleitet.

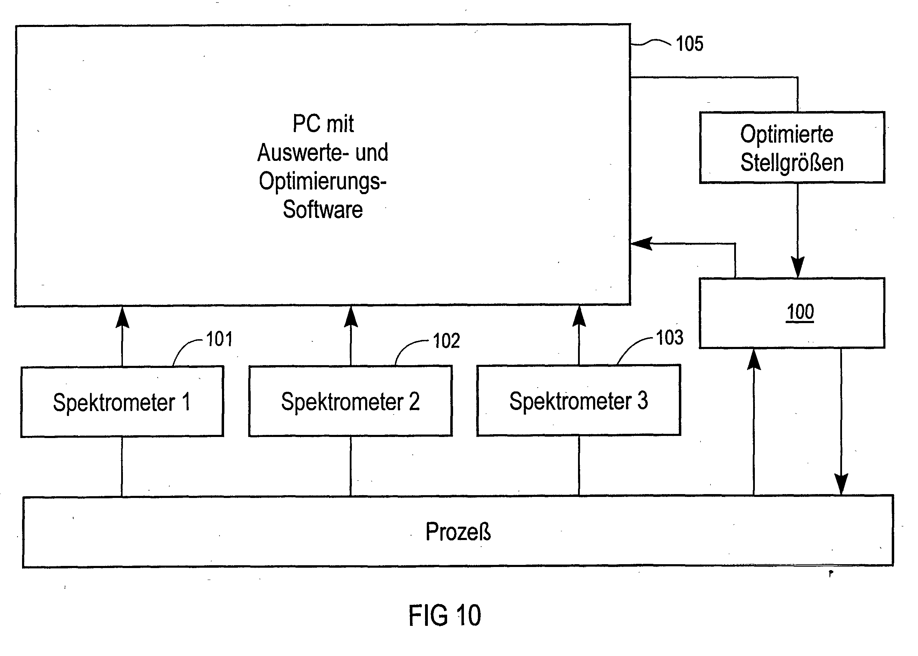

Figur 10 zeigt, wie die anhand eines Digitalrechners 105 mit entsprechender Auswerte- und Optimierungssoftware in das gesamte Prozeßleitsystem eingebunden wird. Dabei werden optimierte Stellgrößen erzeugt, die ein bekanntes Automatisierungsgerät 100 als Prozeßleitsystem beaufschlagen, das in sich bekannter Weise mit der eigentlichen Anlage zur Durchführung des Prozesses in Wechselwirkung steht. Im Prinzip werden also die üblichen Anlagen durch mehrere Spektrometer 101 bis 103 und ein zugehöriges Software-Paket, das auf üblichen Rechnern abläuft, ergänzt.

## Patentansprüche

1. Verfahren zur Prozeßführung und zur Prozeßoptimierung beim Herstellen von Papier aus Faserstoff, insbesondere aus Altpapier und/oder Zellstoff, durch Aufbereiten des Faserstoffes und anschließendes Bilden des Papiers in einer Papiermaschine unter Einsatz wenigstens eines Zustandsmodells und/oder Prozeßmodells, mit folgenden Merkmalen:
a) an mindestens einer Stelle werden am aufbereiteten Faserstoff und/oder am Papier kontinuierliche Spektren von elektromagnetischer Strahlung und/oder kontinuierliche Spektren von mechanischen Eigenschaften gemessen,
b) durch mathematische Auswertung der kontinuierlichen Spektren werden Kenngrößen (PC1,...,PCn) für den aufbereiteten Faserstoff und/oder das Papier ermittelt,
c) die Kenngrößen (PC1,...,PCn) und die Labormessungen der Produkteigenschaften werden in das Zustandsmodell eingegeben und/oder es werden zusätzlich die Prozeßeigenschaften in das Prozeßmodell eingegeben, wodurch die Modelle verifiziert werden,
d) mit Hilfe des so aufgestellten Zustands- und/oder Prozeßmodells werden optimierte Stellgrößen für ein vorhandenes Prozeßleitsystem gebildet.

2. Verfahren nach Anspruch 1, **dadurch gekennzeichnet, daß** an mindestens einer Stelle am Faserstoff und/oder am Papier diskrete physikalische und/oder chemische Eigenschaften erfaßt werden.

3. Verfahren nach Anspruch 1 und Anspruch 2, **dadurch gekennzeichnet, daß** die diskreten physikalischen und/oder chemischen Eigenschaften zur Aufstellung des Zustandsmodells und ggf. des Prozeßmodells zusätzlich verwendet werden.

4. Verfahren nach Anspruch 1, **dadurch gekennzeichnet, daß** bei Wellenlängen der elektromagnetischen Strahlung zwischen 100 nm und 400 µm gemessen wird.

5. Verfahren nach Anspruch 4, **dadurch gekennzeichnet, daß** die elektromagnetische Strahlung in Absorptions-, Emissions-, Lumineszenz- oder als Raman-Spektrum erfaßt wird.

6. Verfahren nach Anspruch 4, **dadurch gekennzeichnet, daß** die elektromagnetische Strahlung in Transmission, direkter oder diffuser Reflexion oder gedämpfter Totalreflektion (ATR) erfaßt wird.

7. Verfahren nach Anspruch 1, **dadurch gekennzeichnet, daß** als Spektren der mechanischen Eigenschaften die Faserlängenverteilung oder die Siebfraktionen der Fasern herangezogen werden.

8. Verfahren nach Anspruch 1, **dadurch gekennzeichnet, daß** zur Papierherstellung Altpapier aus mindestens einer Altpapierlinie verwendet wird, wobei die Anzahl von parallel geschalteter Altpapierlinie nicht begrenzt ist.

9. Verfahren nach Anspruch 1, **dadurch gekennzeichnet, daß** die Messung der kontinuierlichen Spektren am Ausgang der Altpapieraufbereitung und/oder nach der Stoffaufbereitung und/oder im Bereich der Papierbildung in der Papiermaschine erfolgt.

10. Verfahren nach Anspruch 1, **dadurch gekennzeichnet, daß** an einer vorgegebenen Anzahl von Spektren eine Hauptkomponentenanalyse durchgeführt und zur Datenreduktion eine entsprechende Anzahl von Scores ausgewählt wird, und daß daraus die Kenngrößen für die Modellbildung ermittelt werden.

11. Verfahren nach Anspruch 9, **dadurch gekennzeichnet, daß** die Spektren vorverarbeitet und verdichtet werden, und daß die spezifischen Kennwerte der Spektren, insbesondere die Hauptkomponenten, zur Beschreibung des Produktzustandes ausgewählt werden und unmittelbar in das Zustandsmodell eingegeben werden.

12. Verfahren nach Anspruch 9, **dadurch gekennzeichnet, daß** die Spektren vorverarbeitet und verdichtet werden, daß deren spezifische Kenngrößen, insbesondere die Hauptkomponenten, in das Zustandsmodell eingebracht werden, und daß am Ausgang des Zustandsmodells die Produkteigenschaften gebildet und unmittelbar in das Prozeßmodell eingegeben werden.

13. Verfahren nach Anspruch 1, **dadurch gekennzeichnet, daß** für die Modellbildung ungeeignete Spektren durch Plausibilitätsprüfung eliminiert werden.

14. Verfahren nach Anspruch 1 , **dadurch gekennzeichnet, daß** als diskrete physikalische und/oder chemische Eigenschaften die Konsistenz, der Mahlgrad, der Durchfluß der Fasersuspension und/oder das Flächengewicht und die Feuchtigkeit des Papiers erfaßt werden.

15. Verfahren nach Anspruch 1, **dadurch gekennzeichnet, daß** die durch Auswertung der kontinuierlichen Spektren erhaltenen Kenngrößen zur Steuerung und/oder Regelung des Papierbildungsprozesses herangezogen werden.

16. Verfahren nach Anspruch 14, **dadurch gekennzeichnet, daß** die durch Auswertung der kontinuierlichen Spektren erhaltenen Kenngrößen zur Steuerung und/oder Regelung der Aufbereitungsstufen herangezogen werden, wobei die Aufbereitungsstufen einzeln oder auch im Verbund optimiert werden.

17. Verfahren nach Anspruch 1, **dadurch gekennzeichnet, daß** zur Steuerung und/oder Regelung der Aufbereitungsstufen die Qualitätsparameter des aufbereiteten Stoffes, wie insbesondere die Weiße, Schmutzpunkte, Reißlänge, modelliert werden.

18. Verfahren nach Anspruch 16, **dadurch gekennzeichnet, daß** die Modellansätze neben der Vorhersage der Produktqualität auch zur Berechnung des Einsatzes der Hilfsstoffe, wie Leim oder Chemikalieneinsätze, herangezogen werden.

19. Verfahren nach Anspruch 16, wobei eine Steuerung und/oder Regelung der Papierherstellung erfolgt, **dadurch gekennzeichnet, daß** der Modellansatz mit den Qualitätsparametern in einer Prozeßoptimierung eingesetzt wird.

20. Verfahren nach einem der vorhergehenden Ansprüche, **dadurch gekennzeichnet, daß** eine Kostenfunktion gebildet wird, die mit einem Optimierer durch geeignete Variation der Stellgrößen optimiert wird.

21. Verfahren nach einem der vorhergehenden Ansprüche, **dadurch gekennzeichnet, daß** die Optimierung durch genetische Algorithmen erfolgt.

22. Verfahren nach Anspruch 19, **dadurch gekennzeichnet, daß** als Kostenfunktion eine Kostenfunktion für die Produktionskosten und/oder eine Gewinnfunktion eingesetzt wird.

23. Verfahren nach einem der vorhergehenden Ansprüche, **dadurch gekennzeichnet, daß** als dynamisches Modell zur Überprüfung der durch ein statisches Modell optimierten Stellgrößen eingesetzt wird, wobei das eingesetzte dynamische Modell ein neuronales Netz eingesetzt wird.

24. Verfahren nach einem der vorhergehenden Ansprüche, **dadurch gekennzeichnet, daß** das Modell und/oder die Teilmodelle online trainiert werden.

25. Verfahren nach einem der vorhergehenden Ansprüche, **dadurch gekennzeichnet, daß** durch rechnergestützte Auswahl aller informationstragenden Daten eine Überprüfung von erhaltenen Ergebnissen erfolgt ("Novelty Detection").

26. Verfahren nach Anspruch 25, **dadurch gekennzeichnet, daß** bei Vorliegen nichtkonsistenter Ergebnisse ein Nachtrainieren erfolgt.

27. Vorrichtung zur Durchführung des Verfahrens nach einem der Ansprüche 1 bis 26, bestehend aus wenigstens einem Spektrometer (101, 102, 103) zum Messen von kontinuierlichen Spektren, aus einem Digitalrechner (105) zur mathematischen Auswertung der kontinuierlichen Spektren zwecks Ermittlung der Kenngrößen (PC1 ... PCn) und zur Aufstellung des Zustandsmodells und/oder Prozeßmodells aus den Kenngrößen (PC1 ... PCn, gegebenenfalls den Prozeßeigenschaften, sowie aus einem Prozeßleitsystem (100) zur Prozeßoptimierung zum Herstellen von Papier aus Faserstoff unter Verwendung von optimierten Stellgrößen.

## Claims

1. Method for process management and for process optimisation in the production of paper from fibre pulp, in particular from recycled paper and/or chemical pulp, by treating the fibre pulp and subsequently forming the paper in a paper-making machine while using at least one state model and/or process model, having the following features:
a) at at least one point, continuous spectra of electromagnetic radiation and/or continuous spectra of mechanical properties are measured from the treated fibre pulp and/or from the paper,
b) characteristic quantities (PC1, ..., PCn) for the treated fibre pulp and/or the paper are determined by mathematical evaluation of the continuous spectra,
c) the characteristic quantities (PC1, ..., PCn) and the laboratory measurements of the product properties are entered into the state model and/or the process properties are additionally entered into the process model, by means of which the models are verified,
d) optimised manipulated variables for an existing process control system are formed with the aid of the state model and/or process model set up in this way.

2. Method according to Claim 1, **characterised in that** at at least one point, discrete physical and/or chemical properties are recorded from the fibre pulp and/or from the paper.

3. Method according to Claim 1 and Claim 2, **characterised in that** the discrete physical and/or chemical properties are additionally used for setting up the state model and optionally the process model.

4. Method according to Claim 1, **characterised in that** measurements are taken at wavelengths of the electromagnetic radiation of between 100 nm and 400 µm.

5. Method according to Claim 4, **characterised in that** the electromagnetic radiation is recorded in an absorption, emission or luminescence spectrum or as a Raman spectrum.

6. Method according to Claim 4, **characterised in that** the electromagnetic radiation is recorded in transmission, direct or diffuse reflection or attenuated total reflection (ATR).

7. Method according to Claim 1, **characterised in that** the fibre length distribution or the screen fractions of the fibres are employed as spectra of the mechanical properties.

8. Method according to Claim 1, **characterised in that** recycled paper from at least one recycled-paper line is used for the production of paper, the number of recycled-paper lines that are connected in parallel being unlimited.

9. Method according to Claim 1, **characterised in that** the measurement of the continuous spectra is carried out at the output of the recycled-paper treatment and/or after the pulp-treatment and/or in the region of the paper-formation in the paper-making machine.

10. Method according to Claim 1, **characterised in that** a principal component analysis is carried out on a predetermined number of spectra and, for data reduction, a corresponding number of scores is selected, and **in that** the characteristic quantities for the model formation are determined therefrom.

11. Method according to Claim 9, **characterised in that** the spectra are pre-processed and compressed, and **in that** the specific characteristic values of the spectra, in particular the principal components, are selected for describing the product state and are entered directly into the state model.

12. Method according to Claim 9, **characterised in that** the spectra are pre-processed and compressed, **in that** their specific characteristic quantities, in particular the principal components, are introduced into the state model, and **in that** the product properties are formed at the output of the state model and are entered directly into the process model.

13. Method according to Claim 1, **characterised in that** spectra that are unsuitable for the model formation are eliminated by plausibility testing.

14. Method according to Claim 1, **characterised in that** the consistency, the degree of freeness, the flow rate of the fibre suspension and/or the basis weight and the moisture of the paper are recorded as discrete physical and/or chemical properties.

15. Method according to Claim 1, **characterised in that** the characteristic quantities that are obtained by evaluating the continuous spectra are employed for controlling and/or regulating the paper-formation process.

16. Method according to Claim 14, **characterised in that** the characteristic quantities that are obtained by evaluating the continuous spectra are employed for controlling and/or regulating the treatment stages, the treatment stages being optimised individually or even in combination.

17. Method according to Claim 1, **characterised in that** the quality parameters of the treated pulp, such as in particular the whiteness, dirt specks, tearing length, are modelled in order to control and/or regulate the treatment stages.

18. Method according to Claim 16, **characterised in that** the model approaches are also employed for calculating the use of the auxiliary materials, such as glue or chemical utilization, besides predicting the product quality.

19. Method according to Claim 16, wherein control and/or regulation of the paper production is carried out, **characterised in that** the model approach is used with the quality parameters in a process optimisation.

20. Method according to one of the preceding claims, **characterised in that** a cost function is formed that is optimised by an optimiser through suitable variation of the manipulated variables.

21. Method according to one of the preceding claims, **characterised in that** the optimisation is carried out using genetic algorithms.

22. Method according to Claim 19, **characterised in that** a cost function for the production costs and/or a profit function is used as the cost function.

23. Method according to one of the preceding claims, **characterised in that** as a dynamic model is used for checking the manipulated variables that are optimised by a static model, a neural network being used as the dynamic model which is used.

24. Method according to one of the preceding claims, **characterised in that** the model and/or the submodels are trained online.

25. Method according to one of the preceding claims, **characterised in that** a check of the results that are obtained ("novelty detection") is carried out by computer-assisted selection of all data carrying information.

26. Method according to Claim 25, **characterised in that** retraining is carried out when there are inconsistent results.

27. Device for carrying out the method according to one of Claims 1 to 26, consisting of at least one spectrometer (101, 102, 103) for measuring continuous spectra, a digital computer (105) for mathematical evaluation of the continuous spectra with a view to determining the characteristic quantities (PC1 ... PCn) and for setting up the state model and/or process model from the characteristic quantities (PC1 ... PCn) and optionally the process properties, as well as a process control system (100) for optimising the process for the production of paper from fibre pulp with the use of optimised manipulated variables.

## Revendications

1. Procédé pour conduire un processus et pour optimiser un processus lors de la fabrication de papier en matière fibreuse, notamment en pâte de vieux papier ou pâte mécanique, par préparation de la matière fibreuse et ensuite par formation du papier dans une machine à papier, en utilisant au moins un modèle d'état et/ou un modèle de processus ayant les caractéristiques suivantes :
a) on mesure en au moins un point sur la matière fibreuse préparée et/ou sur le papier des spectres continus de rayonnement électromagnétique et/ou des spectres continus de propriétés mécaniques,
b) on forme, en exploitant mathématiquement les spectres continus, des grandeurs caractéristiques (PCl, ..., PCn) pour la matière fibreuse préparée et/ou pour le papier,
c) on entre les grandeurs caractéristiques (PCl, ..., PCn) et les mesures de laboratoire des propriétés associées au produit dans le modèle d'état et/ou on entre en plus des propriétés du processus dans le modèle de processus de manière à vérifier les modèles,
d) à l'aide du modèle d'état et/ou de processus ainsi formé, on forme des grandeurs réglantes optimisées pour un système (100) existant de conduite de processus.

2. Procédé suivant la revendication 1, **caractérisé en ce que** l'on détecte en au moins un point sur la matière fibreuse et/ou sur le papier des propriétés physiques discrètes et/ou des propriétés chimiques discrètes.

3. Procédé suivant la revendication 1 et la revendication 2, **caractérisé en ce que** l'on utilise les propriétés physiques et/ou chimiques discrètes pour établir le modèle d'état et le cas échéant le modèle de processus.

4. Procédé suivant la revendication 1, **caractérisé en ce que** l'on mesure à des longueurs d'onde du rayonnement électromagnétique comprises entre 100 nm et 400 µm.

5. Procédé suivant la revendication 4, **caractérisé en ce que** l'on détecte le rayonnement électromagnétique en tant que spectre d'absorption, d'émission, de luminescence ou de spectre Raman.

6. Procédé suivant la revendication 4, **caractérisé en ce que** l'on détecte le rayonnement électromagnétique en transmission, en réflexion directe ou diffuse, ou en réflexion totale atténuée (ATR).

7. Procédé suivant la revendication 1, **caractérisé en ce que** l'on utilise comme spectres des propriétés mécaniques la répartition de longueur des fibres ou les fractions granulométriques des fibres.

8. Procédé suivant la revendication 1, **caractérisé en ce que** pour fabriquer du papier, on utilise du vieux papier provenant d'au moins une ligne de vieux papier, le nombre de lignes de vieux papier montées en parallèle n'étant pas limité.

9. Procédé suivant la revendication 1, **caractérisé en ce que** l'on effectue la mesure des spectres continus à la sortie de la préparation du vieux papier et/ou après la préparation de la matière et/ou dans la région de la formation du papier.

10. Procédé suivant la revendication 1, **caractérisé en ce que** l'on effectue sur un nombre donné à l'avance de spectres une analyse de composantes principales et pour la réduction des données on choisit un nombre adéquat de scores et on en détermine les grandeurs caractéristiques pour la formation du modèle.

11. Procédé suivant la revendication 9, **caractérisé en ce que** l'on prétraite les spectres et on les comprime et **en ce que** l'on sélectionne les valeurs caractéristiques spécifiques des spectres, notamment les composantes principales pour décrire l'état du produit et on les entre directement dans le modèle d'état.

12. Procédé suivant la revendication 9, **caractérisé en ce que** l'on prétraite et comprime les spectres **en ce que** l'on introduit leurs valeurs caractéristiques spécifiques, notamment les composantes principales, dans le modèle d'état, et **en ce que** l'on forme à la sortie du modèle d'état les propriétés du produit et on les introduit directement dans le modèle de processus.

13. Procédé suivant la revendication 1, **caractérisé en ce que** pour la formation du modèle, on élimine les spectres qui ne conviennent pas par vérification de plausibilité.

14. Procédé suivant la revendication 1, **caractérisé en ce que** l'on relève comme propriétés physiques discrètes et/ou chimiques discrètes la consistance, le degré de raffinage, le débit de la suspension de fibres et/ou le poids par unité de surface et l'humidité du papier.

15. Procédé suivant la revendication 1, **caractérisé en ce que** l'on utilise les grandeurs caractéristiques obtenues par l'exploitation des spectres pour commander et/ou pour réguler les opérations de fabrication du papier.

16. Procédé suivant la revendication 14, **caractérisé en ce que** l'on tire partie pour commander et/ou pour régler les étages de préparation des grandeurs caractéristiques obtenues en exploitant les spectres continus en optimisant seuls ou également en combinaison les étages de préparation.

17. Procédé suivant la revendication 1, **caractérisé en ce que** pour la commande et/ou la régulation des étages de préparation, on modélise les paramètres de qualité de la matière préparée, comme notamment la blancheur, les points d'impuretés, la longueur de rupture.

18. Procédé suivant la revendication 16, **caractérisé en ce que** l'on utilise les équations du modèle, outre pour prédire la qualité du produit, également pour calculer les apports d'adjuvants, comme la colle et les produits chimiques.

19. Procédé suivant la revendication 16, dans lequel on effectue une commande et/ou une régulation de la fabrication du papier, **caractérisé en ce qu'**on utilise l'équation du modèle avec les paramètres de qualité dans une optimisation du processus.

20. Procédé suivant l'une des revendications précédentes, **caractérisé en ce que** l'on forme une fonction de coût que l'on optimise avec un optimiseur en faisant varier d'une matière appropriée les grandeurs réglantes.

21. Procédé suivant l'une des revendications précédentes, **caractérisé en ce que** l'on effectue l'optimisation par des algorithmes génétiques.

22. Procédé suivant la revendication 19, **caractérisé en ce que** l'on utilise comme fonction de coût une fonction de coût pour les coûts de production et/ou une fonction de profit.

23. Procédé suivant l'une des revendications précédentes, **caractérisé en ce que** l'on l'utilise comme modèle dynamique de contrôle des grandeurs réglantes optimisées par un modèle statique, en utilisant comme modèle dynamique mis en oeuvre un réseau neuronal.

24. Procédé suivant l'une des revendications précédentes, **caractérisé en ce que** l'on fait subir au modèle et/ou aux sous-modèles un apprentissage on line.

25. Procédé suivant l'une des revendications précédentes, **caractérisé en ce qu'**il s'effectue par une sélection assistée par ordinateur de toutes les données porteuses d'informations un contrôle des résultats obtenus ("Novelty Detection").

26. Procédé suivant la revendication 15, **caractérisé en ce qu'**il s'effectue un post-apprentissage en présence de résultats non consistants.

27. Dispositif pour la mise en oeuvre du procédé suivant l'une des revendications 1 à 26, constitué d'au moins un spectromètre (101, 102, 103) de mesure de spectres continus, d'un ordinateur (105) numérique d'exploitation mathématique des spectres continus en vue de déterminer les grandeurs caractéristiques (PCl, ... ,PCn) et d'établir le modèle d'état et/ou le modèle de processus à partir des grandeurs caractéristiques (PCl, ... ,PCn) et, le cas échéant, des propriétés de processus, ainsi que d'un système (100) de conduite de processus destiné à optimiser la fabrication de papier à partir de matière fibreuse en utilisant les grandeurs réglantes optimisées.
